(19) Europäisches Patentamt
European Patent Office
Office européen des brevets

(11) Veröffentlichungsnummer: **0 042 506**
**B1**

(12) **EUROPÄISCHE PATENTSCHRIFT**

(45) Veröffentlichungstag der Patentschrift: **28.03.84**

(21) Anmeldenummer: **81104204.3**

(22) Anmeldetag: **02.06.81**

(51) Int. Cl.³: **C 09 D 5/02,** C 08 F 220/18, C 08 F 212/08 // (C08F220/18, 212/08, 220/18, 220/18, 220/04, 220/28, 222/00),(C08F212/08, 220/18, 220/18, 220/18, 220/04, 220/28, 222/00)

(54) **Copolymerisate auf Basis von Styrol und (Meth)Acrylsäureestern und ihre Verwendung in benzinhaltigen Fassadenfarben oder Putzen.**

(30) Priorität: **21.06.80 DE 3023326**

(43) Veröffentlichungstag der Anmeldung: **30.12.81 Patentblatt 81/52**

(45) Bekanntmachung des Hinweises auf die Patenterteilung: **28.03.84 Patentblatt 84/13**

(84) Benannte Vertragsstaaten: **AT BE CH DE FR GB IT LI NL SE**

(56) Entgegenhaltungen:
**DE - A - 2 833 468**
**FR - A - 2 117 189**
**US - A - 3 202 625**

(73) Patentinhaber: **BASF Aktiengesellschaft, Carl-Bosch-Strasse 38, D-6700 Ludwigshafen (DE)**

(72) Erfinder: **Neubert, Gerhard, Dr., Panoramastrasse 11, D-6719 Battenberg (DE)**
Erfinder: **Wistuba, Eckehardt, Dr., Im Obergarten 7, D-6702 Bad Duerkheim (DE)**

**EP 0 042 506 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Copolymerisate auf Basis von Styrol und (Meth)Acrylsäureestern und ihre Verwendung in benzinhaltigen Fassadenfarben oder Putzen

Die vorliegende Erfindung betrifft Copolymerisate auf Basis von Styrol und (Meth)Acrylsäureestern, die eine verbesserte Löslichkeit in Kohlenwasserstoffen und gleichzeitig erhöhte Blockfestigkeit aufweisen und die besonders als Bindemittel in benzinhaltigen Fassadenfarben und Putzen geeignet sind.

Aus der britischen Patentschrift Nr. 988272 sind Copolymerisate, insbesondere von Vinyltoluol, mit Acrylsäureestern 8 bis 16 C-Atome enthaltender Alkanole bekannt. Diese sind als Bindemittel für Anstrichstoffe und Putze geeignet. Derartige Copolymerisate weisen, soweit sie eine ausreichende Blockfestigkeit durch einen hohen Anteil an einpolymerisiertem Vinyltoluol aufweisen, keine befriedigende Witterungsbeständigkeit auf, so dass damit hergestellte Anstriche rasch vergilben und früh und stark kreiden. Entsprechende Copolymerisate, die anstelle von Vinyltoluol Styrol einpolymerisiert enthalten, sind zwar besser witterungs- und vergilbungsbeständig, doch lässt ihre Löslichkeit in aromatenarmen Kohlenwasserstofflösungsmitteln, wie Testbenzin, und/oder ihre Blockfestigkeit zu wünschen übrig. Soweit diese in Testbenzin bis zu Temperaturen von unter 0°C löslich sind, besitzen sie als Festprodukte keine ausreichende Blockfestigkeit; sie blocken und verkleben bei Lagerung und müssen daher kostenaufwendiger in gelöster Form gelagert und transportiert werden.

Der Anwendungsbereich der bekannten testbenzinlöslichen Styrolcopolymerisate wird überdies durch ihre Unverträglichkeit mit den meisten anderen Lackbindemitteln eingeschränkt. So kann beispielsweise nicht mit verseifungsbeständigen Vinylchloridcopolymerisaten oder höhermolekularen Chlorkautschukmarken kombiniert werden.

Aus der britischen Patentschrift Nr. 1327530 ist die Verwendung von Homo- und Copolymerisaten des Isobutylmethacrylats, ggf. mit Acrylsäureestern 6 bis 12 C-Atome enthaltender Alkanole als Testbenzin lösliche blockfeste Bindemittel für Fassadenfarben bekannt. Derartige Copolymerisate enthalten jedoch verhältnismässig kleine Anteile langkettiger Acrylsäureester einpolymerisiert, so dass sie verhältnismässig hohe Anteile des kostspieligen Isobutylmethacrylats einpolymerisiert enthalten müssen, um eine ausreichende Blockfestigkeit zu gewährleisten.

Ein Nachteil von weder Vinyltoluol noch Isobutylmethacrylat einpolymerisiert enthaltenden Copolymerisatbindemitteln der genannten Art ist vor allem darin zu sehen, dass ihre Lösungen in Benzin bzw. Testbenzin bei Temperaturen unter 0°C im allgemeinen zwei Phasen bilden, soweit es sich dabei um ausreichend blockfeste Copolymerisate handelt. Eine derartige Zweiphasenbildung stört jedoch bei Verwendung der Copolymerisate als Bindemittel für Fassadenfarben und Putze, insbesondere dann, wenn diese bei Temperaturen um oder unter dem Gefrierpunkt eingesetzt werden.

Der vorliegenden Erfindung liegt daher die Aufgabe zugrunde, solche Copolymerisate zur Verfügung zu stellen, die blockfeste Filme mit guter Witterungsbeständigkeit ergeben und die verbesserte Verträglichkeit mit anderen Lackbindemitteln aufweisen, sich durch hohe Beständigkeit gegen verseifende Chemikalien auszeichnen und die gleichzeitig bei nur relativ geringem Anteil an einpolymerisiertem Isobutylmethacrylat in Benzinlösung bei Temperaturen um den Gefrierpunkt bis etwa −10°C eine verminderte Neigung zur Zweiphasenbildung aufweisen.

Copolymerisate eines K-Wertes zwischen 15 und 60 aus A) 10 bis 40 Gew.-% Styrol, B) 10 bis 50 Gew.-% tert.-Butylacrylat und/oder Vinylpivalat, C) 20 bis 40 Gew.-% Isobutylmethacrylat, D) 5 bis 20 Gew.-% (Meth)Acrylsäureester 10 bis 20 C-Atome enthaltender Alkanole, und E) 0 bis 5 Gew.-% monoolefinisch ungesättigter, 3 bis 5 C-Atome enthaltender Mono- und/oder Dicarbonsäuren und/oder deren β-Hydroxyalkylestern und/oder Monoalkylestern der Dicarbonsäuren, bei denen die Komponente D bezogen auf die Komponente A in Mengen zwischen 20 und 50 Gew.-% einpolymerisiert und die Summe der unter A bis E aufgeführten Gewichtsprozente gleich 100 ist, erfüllen diese Aufgabe. Die neuen Copolymerisate sind besonders gut als Bindemittel für benzinhaltige Fassadenfarben oder Putze geeignet. Die K-Werte können nach DIN 53726 bzw. nach H. Fikentscher, „Cellulose Chem.", Vol. 13 [A 32], S. 58 bestimmt werden.

Die Copolymerisate selbst zeichnen sich sowohl durch hohe Blockfestigkeit als auch durch hervorragende Löslichkeit in aromatenarmem Testbenzin, selbst im Temperaturbereich bis −10°C aus, so dass sie auch als Festprodukte gut gelagert und transportiert werden können. Mit den erfindungsgemässen Copolymerisaten als Bindemittel enthaltenden Fassadenfarben und Putzen können Beschichtungen erhalten werden, die besonders hart, wärmestandfest, verschmutzungsresistent und ausserdem besonders witterungs- und vergilbungsbeständig sind und die sich durch hohe Resistenz gegen verseifend wirkende Chemikalien auszeichnen.

Die neuen Copolymerisate sind gut verträglich und daher kombinierbar mit vielen anderen üblichen Lackrohstoffen, z.B. mit Vinylchloridcopolymerisaten und Chlorkautschuken mit Viskositäten der 20%igen Toluollösungen von meist 4 bis 120, insbesondere von 8 bis 55 mPa·s.

Die neuen Copolymerisate können in an sich bekannter Weise z.B. durch Substanz-, Lösungs-, Emulsions- oder Suspensionspolymerisation, unter Mitverwendung der hierfür üblichen Polymerisationsinitiatoren, z.B. von organischen oder anorganischen Peroxiden, bei üblichen Polymerisationstemperaturen hergestellt werden, die im allgemeinen zwischen 60 und 180, vorzugsweise zwischen 80 und 140°C liegen. Die Herstellung der Copolymerisate nach dem Suspensionspolymerisationsverfahren wird vorgezogen. Die K-Werte der Copolymerisate betragen vorzugsweise 25 bis 45 (gemessen 3%ig in Aceton). Die Copolymerisate enthalten vorzugsweise 20 bis 40 Gew.-% Styrol, 20 bis 40 Gew.-% der Komponente B, 25 bis 40 Gew.-% Isobutylmethacrylat, 5 bis 15 Gew.-% der Komponente D und 0 bis 3 Gew.-% der Komponente E einpolymerisiert. Als Komponente B wird tert.-Butylacrylat vorgezogen. Besonders geeignet als Komponente D sind die Acrylsäure- und Methacrylsäureester 11 bis 15 C-Atome enthaltender Alkanole, die geradkettig oder verzweigt sein können. Beispiele hierfür sind besonders die Acrylsäureester 12 bis 14 C-Atome enthaltender geradkettiger Alkanole, wie Laurylacrylat und Myristinacrylat. Von besonderem Interesse sind Copolymerisate, die 7 bis 12 Gew.-% Laurylacrylat als Komponente D einpolymerisiert enthalten. Die Menge der Komponente D, bezogen auf die Menge der Komponente A, liegt vorzugsweise im Bereich von 25 bis 35 Gew.-%.

Die in die Copolymerisate einpolymerisierten Monomeren E beeinflussen die Dispergierwirkung der Copolymerisate in Fassadenfarben und Putzen. Als stark polare Verbindungen verringern sie jedoch die Benzinlöslichkeit der Copolymerisate. Ihr Anteil ist daher im allgemeinen um so geringer, je kleiner das betreffende Monomerenmolekül ist. Ein Gehalt der Copolymerisate an Monomeren E ist nicht erforderlich, doch ist in vielen Fällen ein Gehalt von 0,5 bis 3 Gew.-% bezogen auf das Polymerisat, von Vorteil. Beispiele für derartige Monomere E sind Acryl-, Methacryl-, Malein-, Fumarsäure, Hydroxyalkylester, die 2 bis 3 C-Atome im Alkylrest enthalten und sich vorzugsweise von den Monocarbonsäuren ableiten, wie β-Hydroxyäthylacrylat und -methacrylat, β-Hydroxypropylacrylat und -methacrylat, sowie Monoester der Malein- oder Fumarsäure mit 1 bis 18 C-Atomen enthaltenden Alkanolen, wie Maleinsäuremonon-butylester, Maleinsäuremonoisobutylester, Fumarsäuremonoäthylester, Fumarsäuremono-2-äthylhexylester, Maleinsäuremonolaurylester und Maleinsäuremono-2-äthylhexylester.

Aus den erfindungsgemässen Copolymerisaten können in der für die Herstellung physikalisch trocknender Anstrichstoffe üblicher Weise unter Mitverwendung von Lacklösungsmitteln, wie vor allem Testbenzin, Anstrichstoffe, insbesondere für die Beschichtung von mineralischen Untergründen, wie Mauerwerk, Beton, mineralischem Putz, Ziegeln und Asbestzement, als Fassadenfarben und Putze hergestellt werden. Dabei können übliche Weichmacher, Pigmente und Füllstoffe sowie weitere Lackrohstoffe und Lackhilfsstoffe, wie Antiabsetzmittel, Verdickungsmittel und Netzmittel, mitverwendet werden. Unter Verwendung der Copolymerisate als Bindemittel hergestellte Anstrichstoffe, wie Fassadenfarben und Putze, können in an sich üblicher Weise verarbeitet werden, z.B. durch Rollen, Spritzen oder Streichen.

Die in den folgenden Beispielen angegebenen Teile und Prozente beziehen sich auf das Gewicht.

*Beispiel 1:*

70 Teile Styrol, 70 Teile tert.-Butylacrylat, 40 Teile Isobutylmethacrylat und 20 Teile Laurylacrylat werden unter Stickstoff auf 100°C erhitzt. Unter Rühren wird 1 Teil Cumolhydroperoxid, das in 2 Teilen Poluol gelöst ist, zugegeben, die Temperatur auf 130°C erhöht und innerhalb 4 h eine Monomermischung, bestehend aus 280 Teilen Styrol, 280 Teilen tert.-Butylacrylat, 160 Teilen Isobutylmethacrylat und 80 Teilen Laurylacrylat sowie, gleichzeitig beginnend, innerhalb 4½ h eine Initiatorlösung, bestehend aus 9 Teilen Cumolhydroperoxid und 18 Teilen Toluol, zugegeben. Bei 140°C wird 1 h nachpolymerisiert. Im Vakuum wird das geschmolzene Polymerisat bei 140 bis 150°C entgast. Die Polymerkenndaten sind in der folgenden Tabelle zusammengestellt.

*Beispiel 2:*

30 Teile Styrol, 35 Teile Isobutylmethacrylat, 25 Teile tert.-Butylacrylat und 10 Teile Laurylacrylat werden — wie in Beispiel 1 angegeben — polymerisiert.

Die Polymerkenndaten sind in der folgenden Tabelle zusammengefasst.

Das Copolymerisat ist mit Vinylchlorid/Vinylisobutylether-Copolymerisaten, wie sie im Handel unter der Bezeichnung ®Laroflex MP erhältlich sind, sowie mit Chlorkautschukmarken der Typenbezeichnungen mit den Ziffern 10 bis 40 verträglich, was sich durch Abmischen z.B. der 25%igen Solventnaphtalösungen und anschliessendes Trocknen eines daraus hergestellten Films leicht erkennen lässt.

*Beispiel 3:*

30 Teile Styrol, 37 Teile tert.-Butylacrylat, 25 Teile Isobutylmethacrylat und 8 Teile Laurylacrylat werden — wie in Beispiel 1 angegeben — polymerisiert. Die Polymerkenndaten sind in der folgenden Tabelle zusammengefasst.

*Beispiel 4:*

140 Teile Isobutylmethacrylat, 120 Teile Styrol, 100 Teile tert.-Butylacrylat, 40 Teile Laurylacrylat und 6,4 Teile Benzoylperoxid werden bei 20°C in eine Lösung von 4 Teilen Polyvinylpyrrolidon (K-Wert 90) in 1200 Teile Wasser gegeben und anschliessend 6½ h bei 80°C polymerisiert, wobei mit 300 tr/min gerührt wird. Man saugt dann ab, wäscht mit Wasser und trocknet 20 h bei 40°C. Die Kennwerte des erhaltenen Suspensionspolymerisates sind in der folgenden Tabelle zusammengestellt.

*Beispiel 5: (Fassadenfarbe)*

Zur Herstellung einer Fassadenfarbe werden 100 Teile des Copolymerisates des Beispiels 4 in 250 Teilen Testbenzin mit einem Siedebereich von 155 bis 185°C und einem Aromatengehalt von 17% sowie 40 Teilen Chlorparaffin mit einem Chlorgehalt von 60% als Weichmacher gelöst. Die Lösung wird durch Abreiben mit 120 Teilen Rutil und 550 Teilen Calcit (0,002 bis 0,2 mm Korndurchmesser) pigmentiert und gleichzeitig mit 5 Teilen eines Verdickungsmittels auf der Basis von hydriertem Ricinusöl, wie es beispielsweise unter der Bezeichnung Rilanit spezial im Handel erhältlich ist, verdickt. Die Fassadenfarbe kann, ggf. unter Zusatz von weiterem Testbenzin, bei Temperaturen bis etwa −5° C verarbeitet und gelagert werden, ohne dass Entmischung eintritt.

*Beispiel 6: (Putz)*

Ein Fassadenputz wird analog zu den Angaben in Beispiel 5 aus 100 Teilen des Copolymerisates des Beispiels 4, 50 Teilen Chlorparaffin, 200 Teilen Testbenzin, 150 Teilen Rutil, 600 Teilen Calcit (0,05 bis 0,4 mm Durchmesser), 200 Teilen Mikrocalcit und 8 Teilen des gleichen Verdickungsmittels hergestellt. Der Putz kann, ggf. unter Zusatz von weiterem Testbenzin, bei Temperaturen bis −5° C gelagert und verarbeitet werden.

*Vergleichsversuch*

Durch Lösungspolymerisation von 45 Teilen Styrol und 55 Teilen 2-Äthylhexylacrylat in 80 Teilen Testbenzin vom Siedebereich 155 bis 185° C und einem Aromatengehalt um 18% wird unter Zuhilfenahme von 0,5 Teilen tert.-Butylperbenzoat bei 130° C ein Copolymerisat mit den in der folgenden Tabelle angegebenen Kennwerten hergestellt.

Tabelle

| | Beispiel Nr. | | | | Vergleichs-versuch |
|---|---|---|---|---|---|
| | 1 | 2 | 3 | 4 | |
| K-Wert (3%ig in Aceton) | 35 | 36 | 35 | 33 | 36 |
| Auslaufzeit der 33,3%igen Lösung in Testbenzin* DIN 4 Becher 23° C (s) | 60 | 70 | 60 | 60 | 70 |
| Löslichkeit** des Copolymerisates in dieser Lösung bis zu einer Temperatur (° C) | −6 | −10 | −8 | −7 | −3 |
| Erweichungspunkt nach DIN 53 180 (° C) | 100 | 102 | 97 | 100 | 57 |
| Blockfestigkeit | sehr gut | sehr gut | sehr gut | sehr gut | keine |
| Oberflächenklebrigkeit | klebfrei | klebfrei | klebfrei | klebfrei | klebt stark |

* Aromatengehalt 18%, Siedebereich 155 bis 185° C
** Unterhalb der angegebenen Temperatur ist das Copolymerisat nicht ausreichend löslich

**Patentansprüche**

1. Benzinlösliche Copolymerisate eines K-Werts nach DIN 53 726 zwischen 15 und 60 aus
A) 10 bis 40 Gew.-% Styrol,
B) 10 bis 50 Gew.-% tert.-Butylacrylat und/oder Vinylpivalat,
C) 20 bis 40 Gew.-% Isobutylmethacrylat,
D) 5 bis 20 Gew.-% (Meth)Acrylsäureester 10 bis 20 C-Atome enthaltender Alkanole,
E) 0 bis 5 Gew.-% monoolefinisch ungesättigter, 3 bis 5 C-Atome enthaltender Mono- und/oder Dicarbonsäuren und/oder deren β-Hydroxyalkylestern und/oder Monoalkylestern der Dicarbonsäuren,
wobei Komponente (D), bezogen auf Komponente (A), in Mengen zwischen 20 und 50 Gew.-% einpolymerisiert und die Summe der unter A bis E genannten Gewichtsprozente gleich 100 ist.

2. Verwendung der Copolymerisate gemäss Anspruch 1 als Bindemittel in benzinhaltigen Fassadenfarben oder Putzen.

**Claims**

1. A gasoline-soluble copolymer, having a K value according to DIN 53 726 of from 15 to 60, which contains, as copolimerized units,
(*A*) from 10 to 40% by weight of styrene,
(*B*) from 10 to 50% by weight of tert.-butyl acrylate and/or vinyl pivalate,
(*C*) from 20 to 40% by weight of isobutyl methacrylate,
(*D*) from 5 to 20% by weight of acrylic acid esters and/or (meth)acrylic acid esters of alkanols of 10 to 20 carbon atoms, and
(*E*) from 0 to 5% by weight of monoolefinically unsaturated monocarboxylic acids and/or dicarboxylic acids of 3 to 5 carbon atoms and/or the β-hydroxyalkyl esters and/or monoalkyl esters of the dicarboxylic acids, the amount of component (D) being from 20 to 50% by weight of that of component (A), and the sum of the percentages of A to E being 100.

2. The use of a copolymer as claimed in claim 1 as binder in gasoline-containing masonry paints or renders.

**Revendications**

1. Copolymères, solubles dans l'essence, d'un indice K selon DIN 53 726 compris entre 15 et 60, à base de

A) 10 à 40% en poids de styrène,

B) 10 à 50% en poids d'acrylate de tert.-butyle et/ou pivalate de vinyle,

C) 20 à 40% en poids de méthacrylate d'isobutyle,

D) 5 à 20% en poids d'esters (méth)acryliques d'alcanols contenant 10 à 20 atomes C, et

E) 0 à 5% en poids d'acides mono- et/ou dicarboxyliques à insaturation monooléfinique et contenant 3 à 5 atomes C, et/ou leurs esters β-hydroxyalkyliques et/ou esters monoalkyliques des acides dicarboxyliques,

le composant (D) étant introduit en polymérisation en proportion comprise entre 20 et 50% en poids, rapportée au composant (A), et la somme des pourcentages en poids indiqués sous A à E étant égale à 100.

2. Utilisation des copolymères selon la revendication 1, comme liant de peinture sur façades et d'enduits contenant de l'essence.